# EUROPEAN PATENT APPLICATION

(11) **EP 0 976 967 A1**
(43) Date of publication of application: **02.02.2000**
(21) Application number: 99202410.9
(22) Date of filing: 22.07.1999
(51) Int. Cl.: F16M 3/00, F16F 1/12

(54) **Transportable power generator with enhanced characteristics of vibration damping**

(30) Priority: 31.07.1998 IT MI980540 U
(71) Applicant: CASTELGARDEN S.P.A., I-31033 Castelfranco Veneto (Treviso ) (IT)
(72) Inventor: Ferrari, Maurizio, 20144 Milano (IT)
(74) Representative: Mittler, Enrico

(57) **Abstract**

A transportable power generator is described, that comprises a engine-alternator unit (1) and a bearing frame (2) for the aforesaid unit that is provided with means (6, 7) for its rest on the ground. The engine-alternator unit (1) is stiffly fixed to the bearing frame (2) and elastic suspensions (13) are provided that are incorporated in said means (6, 7) for the resting of the frame (2) on the ground. The elastic suspensions (13) can be associated with feet (6) for the direct support of the frame (2) on the ground or they can be interposed between the frame (2) and bearing rollers (7).

## Description

The present invention concerns a transportable power generator with enhanced characteristics of vibration damping.

Transportable power generators are known, in which a explosion engine and an alternator that are functionally connected to each other are fixed to a bearing frame that can rest on the ground. The support can be direct or by means of legs and rollers.

In some known solutions the damping of the vibrations that are produced by the engine-alternator unit is assigned to devices named "silent-blocks" that are interposed between the same unit and the bearing frame.

However, such devices don't succeed in sufficiently eliminating the transmission of the vibrations to the frame during the operation, and that determines a reduction in the stability and a consequent tendency towards the displacement of the generator on the ground.

It should also be remarked that the existence of various typologies of transportable generators, particularly of the vertical and horizontal type, and the different motorizations that are utilisable make the employment of "silent-blocks" with different characteristics necessary.

Object of the present invention is to realise a transportable power generator unit that provides a more efficient and yet simpler system of damping of the vibrations that are produced by the engine-alternator unit.

According to the invention such object has been reached with a transportable power generator, comprising an engine-alternator unit and a bearing frame for the aforesaid unit that is provided with means for its rest on the ground, characterized in that the engine-alternator unit is stiffly fixed to the bearing frame and elastic suspensions are provided that are incorporated in said means for the resting of the frame on the ground.

The elastic suspensions can be associated with feet for the direct resting of the frame on the ground or they can be interposed between the frame and bearing rollers, preferably for a total of four rest points.

The elastic suspensions according to the invention determine various advantageous effects as compared with the known solutions with "silent-blocks". In particular, there is a substantial damping of the vibrations, that results in a smaller vibration of the engine-alternator unit and of the bearing frame as well as a total elimination of the tendency towards the movement of the generator on its bearing surface. In addition, their cost is very moderate and they can be used with any typology of generator and for any motorization.

The characteristics of the present invention will be made more evident by the following detailed description of an embodiment thereof that is illustrated as a non limiting example in the enclosed drawings, in which:
Figure 1 shows in perspective view a vertical type transportable power generator that is provided with elastic suspensions according to the invention;
Figure 2 shows the aforesaid vertical type power generator in side view;
Figure 3 shows the magnified detail of a fixing point of the engine-alternator unit to the bearing frame in the generator of Figures 1 and 2;
Figure 4 shows the magnified detail of an elastic suspension inserted in a rest foot of the power generator of Figures 1 and 2;
Figure 5 shows the magnified detail of an elastic suspension interposed between the frame and a bearing roller in the power generator of Figures 1 and 2;
Figure 6 shows a horizontal type transportable power generator that is provided with elastic suspensions according to the invention, in perspectives view;
Figure 7 shows the aforesaid horizontal type power generator, in side view;
Figure 8 shows the magnified detail of a fixing point of the engine-alternator unit to the bearing frame in the generator of Figures 6 and 7.

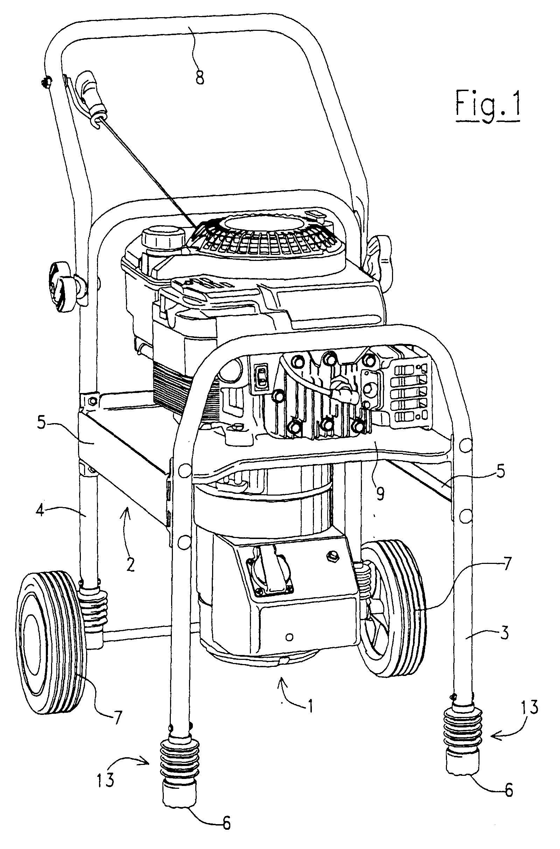

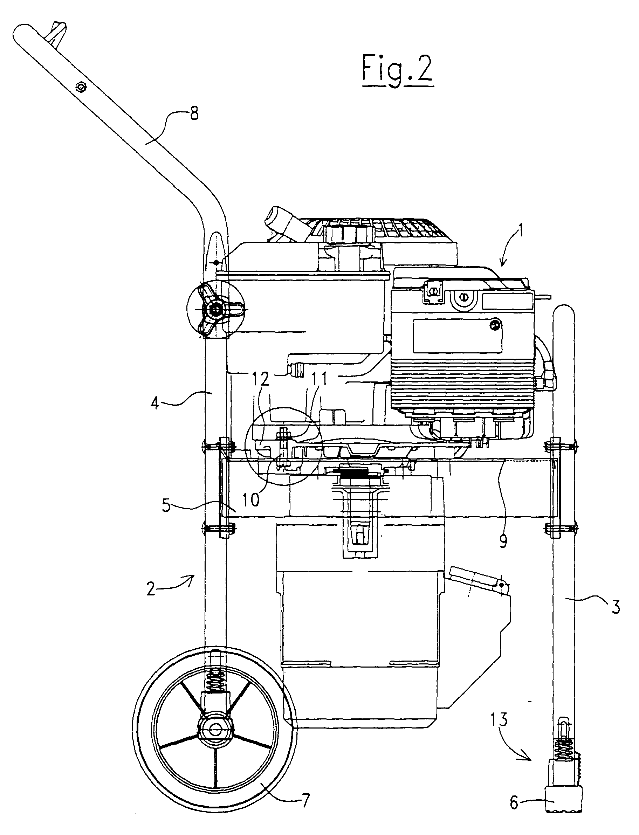

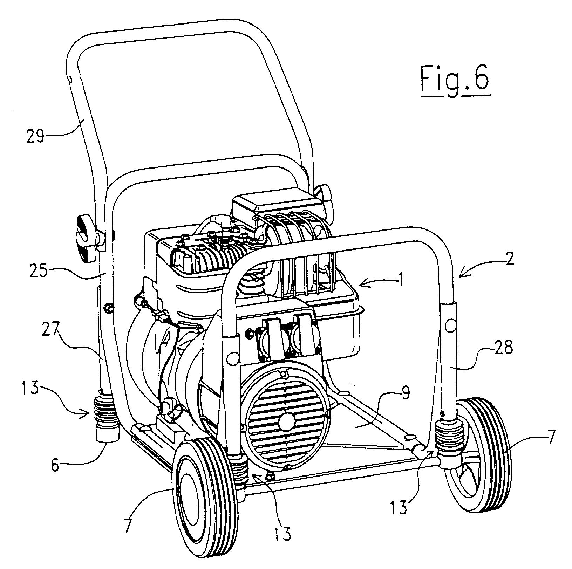

The vertical type power generator of Figures 1 and 2 essentially comprise an engine-alternator unit 1 and a bearing frame 2.

The bearing frame 2 comprises two metallic tubular elements 3 and 4 shaped as a reversed U, that are stiffly coupled to each other by means of a horizontal plate 9 with folded back sides edges 5. The tubular element 3 forms a pair of vertical fore legs provided with rest feet 6 and the tubular element 4 forms a pair of vertical back legs provided with bearing rollers 7. A third metallic tubular element 8, also substantially shaped as a reversed U, is fixed and extends upwards from the tubular back element 4 to form a handle for the gripping and handling of the power generator.

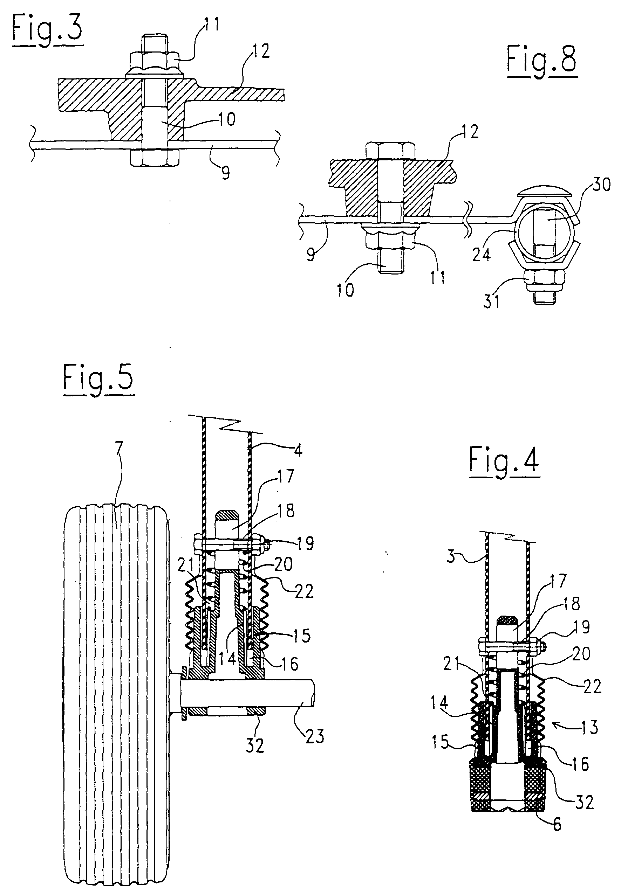

The horizontal plate 9 has the function to support the engine-alternator unit 1, that is stiffly fixed by means of screws 10 with nut 11, which engage with the plate 9 and with fixing flanges 12 of the unit 1, as shown as an example in Figure 3, that represents the detail encircled in Figure 2 in magnified scale.

As shown in Figure 4, an elastic suspension 13 formed by an axial internal body 14 and from a coaxial external body 15 is associated with each rest foot 6 of the frame 2, both bodies extending upwards from a supporting base 32 that is fixedly mounted to the foot 6, between which an annular cavity 16 is defined in which a corresponding lower end of the tubular element 3 is inserted in a vertically sliding way. The axial internal body 14 has a vertically elongated slot 17, in which a screw 18 that is fixed to the tubular element 3 with nut 19 is transversally inserted in a vertically sliding way. A helicoidal spring 20 reacts between the screw 18 and an intermediate shoulder 21 of the internal body 14. An external protection bellows 22 completes the construction of the elastic suspension 13.

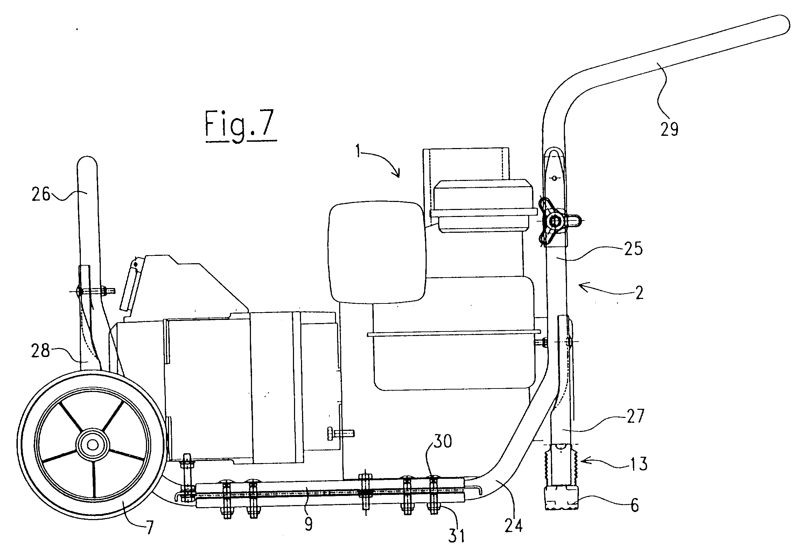

An analogous elastic suspension 13 is interposed between each end of the tubular element 4 and the shaft 23 of the respective roller 7, as shown in Figure 5.

The horizontal type power generator of Figures 6 and 7 is in all analogous to the vertical type one of Figures 1 and 2 with the obvious exception that the engine-alternator unit 1 extends essentially in a horizontal direction and the bearing frame 2 is formed by a single metallic tubular element with lower horizontal parts 24 and vertical back and fore parts 25 and 26 shaped as a reversed U, to which two tubular back legs 27 with rest feet 6, two tubular fore legs 28 with bearing rollers 7 and an additional tubular element 29, substantially shaped as a reversed U are stiffly fixed, that is fixed and extends upwards from the vertical back part 25 of the frame so as to form a handle for the gripping and handling of the power generator.

In this case also, the engine-alternator unit 1 is stiffly fixed to a bearing plate 9 that is in turn stiffly fixed to the tubular lower parts 24 of the frame 2. Figure 8 shows the fixing of the unit 1 to the plate 9, that is completely analogous to the one illustrated in Figure 3 for the power generator of Figures 1 and 2, and that of the plate 9 to one of the aforesaid horizontal tubular parts 24, that is realised by means of a screw 30 with nut 31.

Between the lower ends of the tubular back legs 27 and the rest feet 6 and between the lower ends of the tubular fore legs 28 and the shaft of the rollers 7 elastic suspensions 13 in all analogous to those illustrated in Figures 4 and 5 are inserted.

## Claims

1. Generator of transportable power, comprising a engine-alternator unit (1) and a bearing frame (2) for the aforesaid unit that is provided with means (6, 7) for its rest on the ground, characterized in that the engine-alternator unit (1) is stiffly fixed to the bearing frame (2) and elastic suspensions (13) are provided that are incorporated in said means (6, 7) for the resting of the frame (2) on the ground.

2. Power generator according to claim 1, characterized in that said elastic suspensions (13) are associated with feet (6) for the direct resting of the frame (2) on the ground.

3. Power generator according to claim 1 or 2, characterized in that said elastic suspensions (13) are interposed between the frame (2) and bearing rollers (7).

4. Power generator according to each one of the previous claims, characterized in that said elastic suspensions (13) are associated with four rest points (6, 7) of the frame (2) on the ground.

5. Power generator according to each one of the previous claims, characterized in that said elastic suspensions (13) comprise a supporting base (32) from which an axial internal body (14) extends upwards with which the lower end of a vertical leg (3, 4; 27, 28) of the frame (2) is slidingly engaged and which is provided with a slot (17) in which a screw (18) fixed to said vertical leg (3, 4; 27, 28) is transversally inserted in a vertically sliding way, being provided elastic means (20) that are suitable to thrust said vertical leg (3, 4; 27, 28) upwards as regards said axial internal body (14).

6. Power generator according to claim 1, characterized in that said elastic suspensions (13) also comprise an external axial body (15) extending upwards from said supporting base (32) co-axially to said internal axial body (14) so as to define an annular cavity (16) for the vertically sliding housing of the lower end of said vertical leg (3, 4; 27, 28) of the frame (2).

7. Power generator according to claim 1, characterized in that said frame (2) is formed by two tubular elements (2, 3) shaped as a reversed U that are stiffly coupled to each other through a horizontal plate (9) suitable to the bearing of the engine-alternator unit (1).

8. Power generator according to claim 7, characterized in that said frame (2) comprises an additional tubular element (8) substantially shaped as a reversed U, that is fixed and extends upwards from one of said tubular elements (2, 3) so as to form a handle for the gripping and handling of the power generator.

9. Power generator according to claim 1 characterized in that said frame (2) is formed by a single tubular element with lower horizontal parts (24) and reversed U-shape vertical fore and back posts (26, 25), to which two fore legs (28) and two back legs (27) are stiffly fixed.

10. Power generator according to claim 9, characterized in that said frame (2) comprises an additional tubular element (29) substantially shaped as a reversed U, that is fixed and extends upwards from said vertical back part (25) so as to form a handle for the gripping and handling of the power generator.
